# EUROPEAN PATENT APPLICATION

(11) **EP 2 039 594 A1**
(43) Date of publication of application: **25.03.2009**
(21) Application number: 07788627.3
(22) Date of filing: 25.06.2007
(51) Int. Cl.: B62D 33/037

(54) **ATTACHMENT FOR MOVABLE POSTS OF LOAD-CARRYING BODIES**

(30) Priority: 26.06.2006 ES 200601499 U
(71) Applicant: Mecadetol, S.A., 31119 Imarcoain (Navarra) (ES)
(72) Inventor: ZUGAZA FERNANDEZ, Juan Manuel, E-31119 IMARCOAIN (Navarra) (ES)
(74) Representative: Cabinet Plasseraud
(86) International application number: PCT/ES2007/000379
(87) International publication number: WO 2008/000875

(57) **Abstract**

Attachment for movable posts of load-carrying bodies, formed by a mechanism consisting of a rocker (6) incorporated on the structural shell (1) of the relevant post, said rocker defining a hook (6.1) that is capable of clamping onto a crossmember (7) of the rocking frame (2) of the post in order to immobilize the attachment.

## Description

### Field of the Art

The present invention relates to the arrangement of side boards in load-carrying bodies of trucks, trailers or similar vehicles, proposing an attachment with particular features for the movable posts which are used in the arrangement of said boards.

### State of the Art

The arrangement of posts in relation to the sides of load-carrying bodies of trucks, trailers and similar vehicles for the assembly of boards for closing those sides is known, for the purpose of adapting the arrangement of the load-carrying bodies to particular conditions for use.

Said posts of the load-carrying bodies can be fixed, being incorporated in an installation assembly with the possibility of disassembly for when it is necessary to remove such posts due to the needs of the load or any other circumstance, which has the drawback of the difficulty and the work involved in disassembling and assembling said posts with respect to their installation.

In addition, embodiments of movable posts for this application are known, which are incorporated according to an assembly allowing the movement along the side of the corresponding load-carrying body, being able to be removed to a retracted position without having to disassemble them from the installation, said posts having an attachment to stably fix them at the corresponding points.

Said attachment of the mentioned movable posts requires handling conditions making the use simple and furthermore safely ensuing the immobilization of the retention of the post in the fixing sites, there being based on such factors attachment solutions such as those of Utility Models ES 1 044 617 and ES 1 057 932, which include a bolt element and an actuation lever, connected by means of articulations, connecting rods and springs, the assembly of which forms a complex and expensive mechanism.

In these attachment solutions the actuation lever is arranged such that it can come out when it is actuated to release the attachment, which involves a risk of accidents for the operators handling the mechanism or other people who are close by when the handling is carried out.

Patent ES 200503206 describes an embodiment solving said drawback, forming the mechanism of the attachment with a rocking part defining a tooth that is capable of hooking onto a fixed part and a pin acting as a push-button for actuating the release of the hooking, said rocking part being arranged such that it can rock inwardly when it is actuated to release the hooking, such that it does not come out with the risk of causing accidents.

The assembly of the mechanism according to said patent is, however, complicated and expensive due to the component parts and the arrangement in which they integrate the mechanism, in which the rocking part is incorporated on the body of the relevant post, whereas the hooking fixed part is arranged fixed on the chassis of the load-carrying body to which the post belongs, which forces a play that also makes the handling of the actuation of the attachment quite expensive.

### Object of the Invention

According to the invention, an attachment is proposed structure according to constructive and functional features making it advantageous for fixing the movable posts in the corresponding load-carrying bodies, providing an embodiment improving the conditions of the known attachments for this function.

This attachment object of the invention is applied to movable posts comprising a rocking frame articulated on the body of the post to establish a pivoting support by means of said frame on a seat provided for that purpose, having a mechanism to define an immobilization for the retention of the post in the fixed position, with the possibility of releasing said retention for the movement of the post.

According to the invention, the immobilization mechanism for the retention of the post in the fixed position is formed in this case by a rocker which is incorporated in the structure of the post and which defines a curved end for the retention of the attachment by means of a clamp, a crossmember of the rocking frame of the post collaborating with said rocker for clamping the retention, in which crossmember it is capable of hooking the curved end of the rocker.

A simple arrangement is thus obtained in which the play of the clamp for the retention of the attachment is established between the component elements of the post and not with respect to the chassis of the relevant load-carrying body of the post, whereby a simpler assembly is achieved with optimal assurances of effectiveness in the immobilization of the attachment, the handling of the actuation requiring very little effort.

The rocker is furthermore inwardly rocking, such that any part which may involve a risk of accidents does not come out.

An attachment is thus obtained which has truly advantageous features, acquiring its own identity and a preferred character with respect to the attachments used up until now for the same function.

### Description of the Drawings

Figure 1 shows a front perspective view of the lower part of a movable post in an open position with respect to the fixing attachment.
Figure 2 is a rear perspective view of the post in the same open position, the mechanism of the attachment according to the invention being observed.
Figure 3 is a perspective view the post in the closed attachment position.
Figure 4 is a side sectioned view of the post in the closed attachment position.
Figure 5 is a view like the previous one, with the rocker of the mechanism of the attachment rocked towards the position for releasing the retention.
Figure 6 is an enlarged detail of area VI indicated in Figure 4.

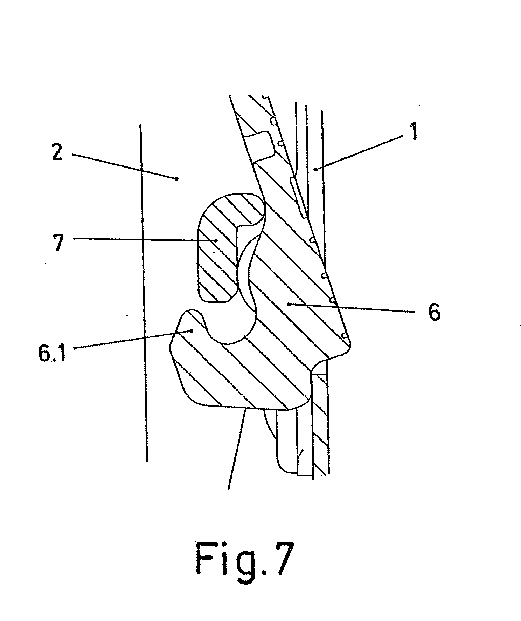

Figure 7 is an enlarged detail of area VII indicated in Figure 5.
Figure 8 is a perspective view like that of Figure 1, with a different support of the rocking frame of the post.
Figure 9 is a side view of an enlarged detail of the support of the rocking frame of the post according to the embodiment of the previous figure.
Figure 10 is another embodiment of the movable post with a different support of the rocking frame.
Figure 11 is a side view of an enlarged detail of the support of the rocking frame of the post according to the embodiment of the previous figure.

### Detailed Description of the Invention

The object of the invention relates to an attachment for movable posts which are arranged to incorporate side boards in the load-carrying bodies of trucks, trailers or similar vehicles, with embodiment features making said attachment functionally advantageous.

The proposed attachment is applied to posts formed by a structural shell (1) on which there is articulated a rocking frame (2) intended to establish a pivoting support for the movement of the post in depth and in height in the maneuver for the coupling onto the retention attachment and in the removal from said attachment.

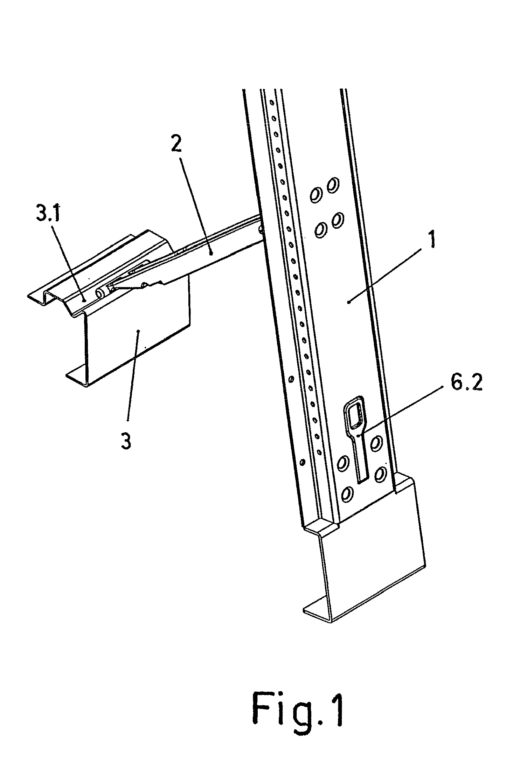

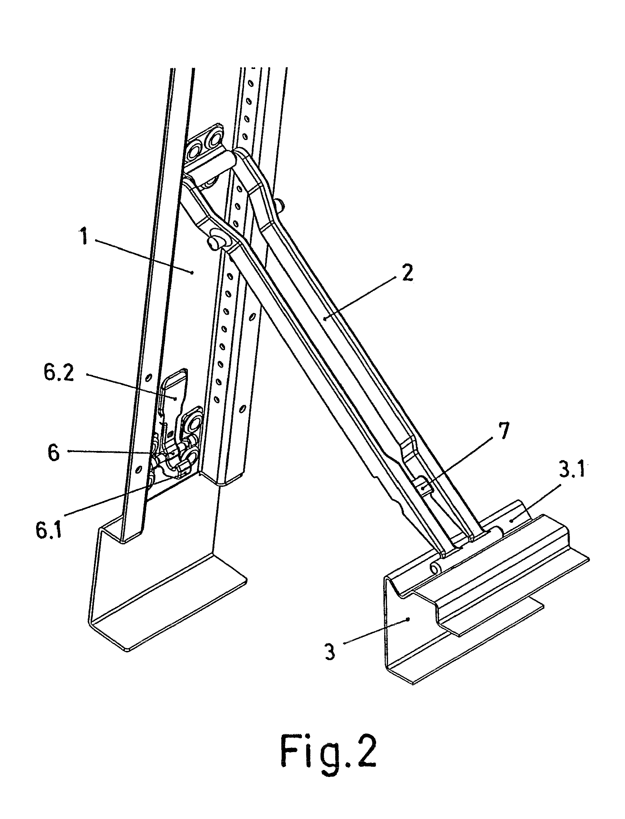

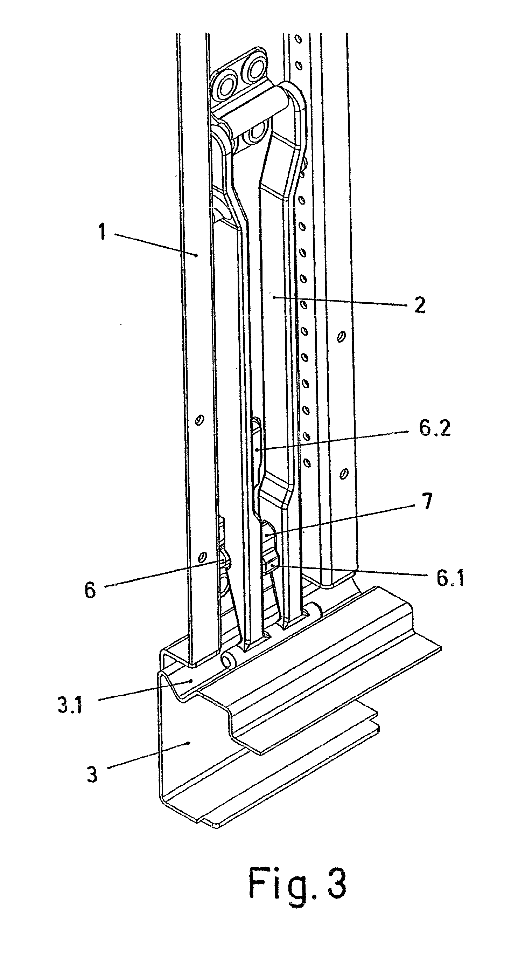

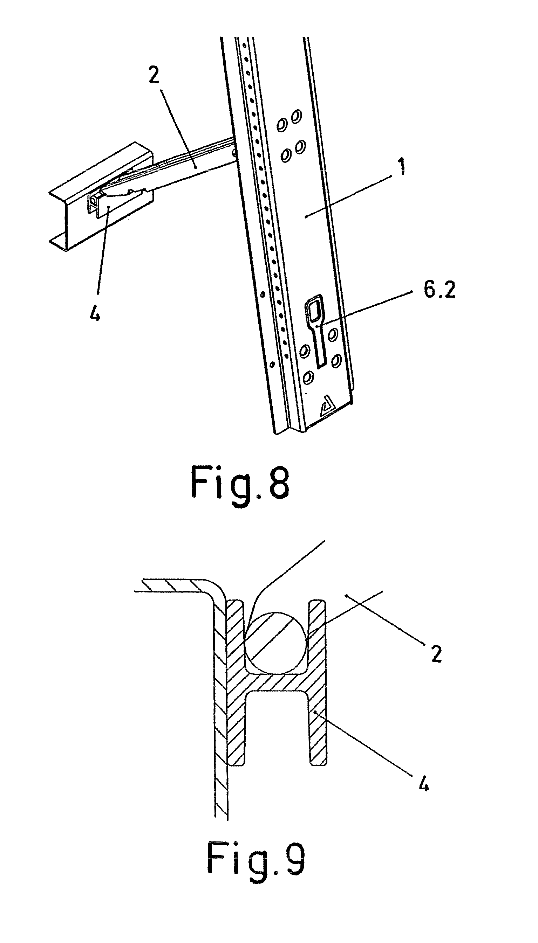

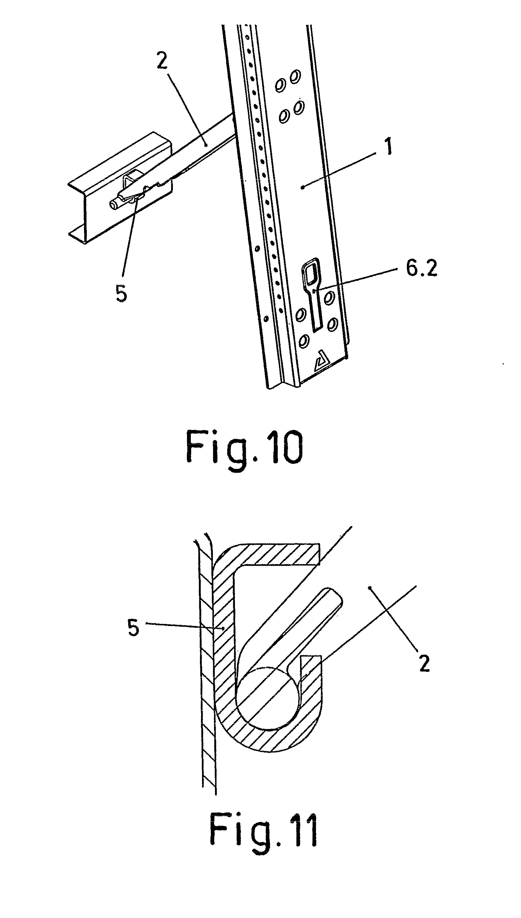

The support of the frame (2) for the pivoting rockling is established on a seat which can have different configurations, such as for example in the form of a profile (3) with a grooving (3.1) at the upper part, as in Figures 1 to 5, or in the form of an H-shaped profile (4), as in the example of Figures 8 and 9, or in the form of an element or profile (5) with a partially open rectangular hollow section, as in the example of Figures 10 and 11, without these forms being limiting.

The attachment further consists of an immobilization mechanism for immobilizing the post in the use position, said mechanism comprising a rocker (6) defining a hook (6.1) and towards the other end an extension (6.2) acting as an actuation lever.

Said rocker (6) is incorporated in an assembly articulated on the structural shell (1) of the post, being in a correlative arrangement with a crossmember (7) of the frame (2), onto which it is capable of clamping by means of the hook (6.1), in a position which is forced by the push of the actual crossmember (7) when the frame (2) is coupled onto the shell (1).

In these conditions, the support of the post on the corresponding seat element (3, 4 or 5) is established by means of the frame (2), such that simply by means of pushing the past towards the relevant load-carrying body, an effect of moving the post close and raising it, until the coupling in the attachment position, is achieved as a result of the pivoting rocking of the frame (2) on the corresponding support.

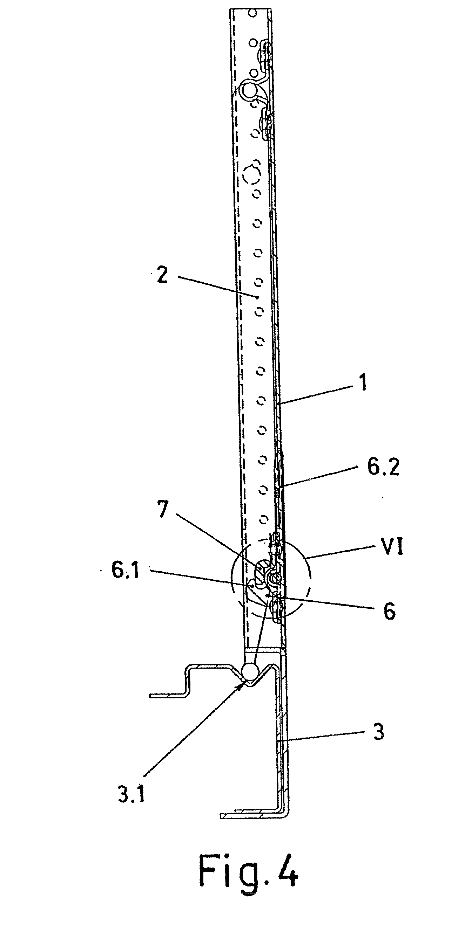

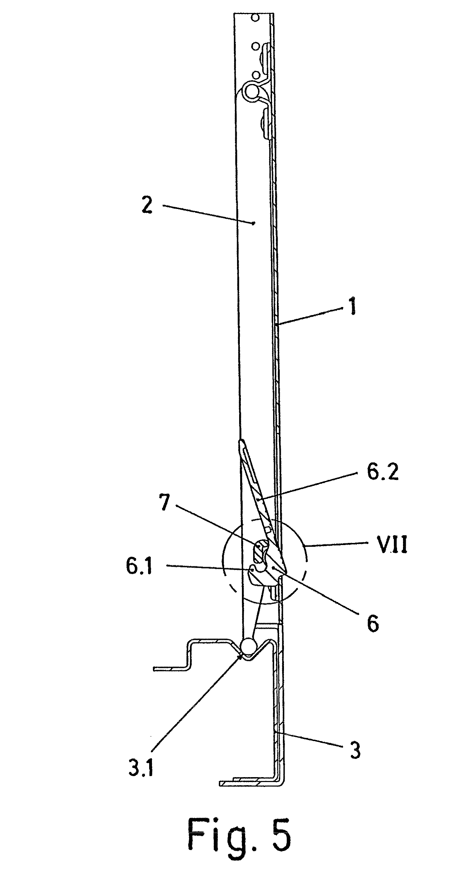

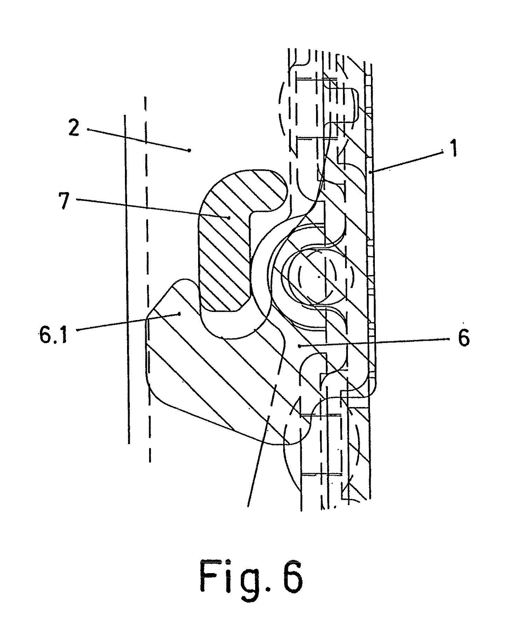

When in said movement the post moves closer to the attachment position, the tooth (6.1) of the rocker (6) collides against the crossmember (7) of the frame (2), the rocking of the rocker (6) occurring, such that the tooth (6.1) slides on the crossmember (7) until surpassing it, as is observed in Figures 5 ant 7; and when the movement of the post towards the attachment position continues, the factual crossmember (7) pushes the rocker (6), making the hook (6.1) clamp onto it, as is observed in Figures 4 and 6, the post thus being immobilized in the attachment position.

To release the immobilization it is only necessary to press on the lever (6.2), whereby the rocker (6) is forced to rock, such that the hook (6.1) is unclamped from the crossmember (7), while at the same time the actual rocker (6) exerts a push on the crossmember (7), whereby the shell (1) of the post comes slightly out, only a slight traction then being necessary to achieve the rocking towards the open position, the post falling gently as a result of the support exerted by the frame (2), which rocks pivoting on its support in the seat (3, 4 or 5), in a manner opposite to the movement of the post closer towards the attachment position.

In the operative rocking of the rocker (6) the lever (6.2) rocks between a position coinciding with the outer plane of the structural shell (1) and an inwardly inclined position, such that said lever (6.2) by no means comes out of the shell (1), whereby it is prevented from causing accidents by blows on the people or objects that are close by at the outer part. Furthermore, in those conditions, the actuation of said lever (6.2) to release the immobilization of the attachment is by means of pushing inwardly, whereby the actuation is facilitated.

## Claims

1. An attachment for movable posts of load-carrying bodies, of the type comprising a rocking frame articulated on the movable post and which is pivotably supported on a seat defined on the structure of the relevant load-carrying body, and a closing mechanism formed by a practicable device which is incorporated in the movable post and which allows establishing a hooking for immobilizing the attachment, **characterized in that** the immobilization mechanism consists of a rocker (6) which is incorporated on the structural shell (1) of the post, said rocker (6) defining a hook (6.1) by means of which it is capable of clamping onto a crossmember (7) of the rocking frame (2) of the post in order to immobilize the attachment.

2. The attachment for movable posts of load-carrying bodies according to claim 1, **characterized in that** the hook (6.1) is in an opposite position with respect to the clamping crossmember (7), being capable of sliding on said crossmember (7) in order to pass to the clamping position by the movement of the post towards the attachment position.

3. The attachment for movable posts of load-carrying bodies according to claims 1 and 2, **characterized in that** between the crossmember (7) and the rocker (6) there is established a support forcing the rocker (6) towards the clamping position by the push of the actual crossmember (7).
